# EUROPEAN PATENT APPLICATION

(11) **EP 4 776 052 A1**
(43) Date of publication of application: **15.07.2026**
(21) Application number: 24858407.0
(22) Date of filing: 21.08.2024
(51) Int. Cl.: G02B 27/01

(54) **OPTICAL SYSTEM AND OPTICAL APPARATUS**

(30) Priority: 30.08.2023 CN 202311110423; 09.11.2023 CN 202311491615; 17.04.2024 CN 202410462951
(71) Applicant: Shanghai Intelight Electronic Technology Co., Ltd., Shanghai 200433 (CN)
(72) Inventor: TAN, Shunyi, Shanghai 200433 (CN)
(74) Representative: Nederlandsch Octrooibureau
(86) International application number: PCT/CN2024/113677
(87) International publication number: WO 2025/044864

(57) **Abstract**

Provided in the present application are an optical system and an optical apparatus. By means of placing a micro display laterally, after image light is coupled into a first device, the distance of an optical path perpendicular to a human eye is shortened by utilizing the lateral propagation of the light in the first device, such that the thickness of the device is greatly reduced. On this basis, the system can also be designed so that image light rays enter and exit from the first device multiple times, thereby further reducing the thickness of the device. Moreover, total reflection is used for replacing a semi-transparent and semi-reflective surface in a PANCAKE scheme and a Birdbath scheme, such that a light effect is greatly improved. In addition, since the micro display is placed laterally and is not located on a light path along which the human eye observes ambient light, a see-through system can be realized, and the observation effect of an optical see-through method for an external environment is much better than the observation effect of Video See Through schemes of existing VR systems.

## Description

The present application claims priority on the basis of the following patent applications:
Priority 1:
   Application No.: 202311110423.4
   Filed Date: August 30, 2023
   Title: Optical System and Optical Apparatus
Priority 2:
   Application No.: 202311491615.4
   Filed Date: November 09, 2023
   Title: Optical System and Optical Apparatus

### TECHNICAL FIELD

The present application relates to the technical field of optics, and in particular, to an optical system and an optical apparatus.

### BACKGROUND ART

In some optical applications, there are strict requirements on the size of an optical system, such as wearable AR/VR devices. Early VR devices employed a free-form lens or Fresnel lens scheme. To achieve a field of view of more than 90°, the length of an optical path thereof is generally more than 50 mm, resulting in a large and bulky system that is uncomfortable to wear. In the latest PANCAKE optical schemes, by changing polarization, light rays undergo a single reflection back between lenses, which can shorten the length of the optical path between 15-25 mm while ensuring a large field of view, thereby greatly reducing the size of the optical system and improving wearing comfort.

However, due to the image light rays passing through a semi-transmissive and semi-reflective surface twice in the PANCAKE scheme, a theoretical maximum optical efficiency is only 25%, which results in a series of problems such as excessively low optical efficiency and the proneness of images to ghosting. In addition, regardless of a free-form lens or a Fresnel lens, the optical path is configured such that imaging devices are positioned in the center of the optical path, no external ambient light can pass through the imaging devices which have non-see-through designs. Therefore, to view external environment, existing VR systems capture images of the external environment using cameras and then process and integrate these images into a display system. Such Video See Through (VST) schemes result in a display effect for the external environment that is far inferior to that of optically direct see-through systems and impose a significant burden on system power consumption and system costs. On the other hand, in traditional AR systems, the mature Birdbath scheme achieves imaging by means of an obliquely arranged semi-transmissive and semi-reflective mirror and a polarization mirror, but has a relatively large thickness (a system with a field of view of 50° usually has a thickness of more than 15 mm, and it is difficult to achieve a larger field of view). Moreover, a micro display is placed close to a reflective lens, which often causes a certain obstruction to a wearer's view of the external environment.

### SUMMARY

In view of the defects in the prior art, the present application aims to provide an optical system and an optical apparatus. Total reflection reduce the size of the system, and the waveguide is used to replace or partially replace the semi-transmissive and semi-reflective mirrors in the Pancake and Birdbath schemes, which improves the optical efficiency, and reduces the size of a system by further folding an optical path by the total reflection inside the waveguide. A laterally positioned imaging device can also enable the system to function as an optical see-through AR system.

An optical system provided by the present application includes: a first device and a second device,
wherein the first device includes a first surface, image light rays are coupled into the first device, and after entering the first device, the image light rays undergo at least one total reflection on the first surface; For example, the first device is a waveguide, and the image light rays undergo one total reflection on an upper surface (the first surface) and are then coupled out of the first device after. For another example, the image light rays undergo one total reflection on each of the upper and lower surfaces of the waveguide and are then coupled out of the first device after.

The first device further includes a first reflective surface, the first reflective surface coupling the image light rays that have undergone total reflection on the first surface out of the first device. The first reflective surface may be located inside the first device. For example, the angle of the image light rays changes after being reflected by the first reflective surface (such as a change in the angle to the first surface), such that the image light rays can be coupled out of the first device.

The image light rays coupled out of the first device is modulated by the second device, and the modulated image light rays are coupled into the first device again and partially or all transmitted through the first reflective surface one or more times. The biggest difference between this implementation and the existing waveguide-based scheme is that the image light rays are guided back to the first device by the second device and are transmitted through the first reflective surface again, such that the optical path can be repeatedly extended in the same space, the size of the system can be reduced, and a larger field of view design (such as a field of view of more than 90°) that cannot be achieved by the waveguide-based scheme can be realized.

Alternatively, in another embodiment, the image light may also be directly transmitted through the second device and enter the viewer's eye for imaging without returning to the first device again. In this implementation, the second device has an optical power, and an object plane of the image light coupled out of the first device is near a focal point or an equivalent focal point of the second device (such as the object plane being located between an optical center of the second device and the focal point of the second device), such that the image light can be modulated into a virtual image at a certain distance and enter the human eye. The difference between this scheme and existing waveguide devices is that the existing waveguide devices already form a virtual image at a certain distance that can be viewed by the human eye after the image light is coupled out of the waveguide, so the second device does not exist. In addition, the existing waveguide devices must achieve pupil expansion by using a plurality of transmissive-reflective surfaces or gratings (such as array waveguides or diffractive waveguides), or by embedding free-form surfaces in the waveguide to perform final adjustment of image light (the curved surfaces change the optical power of the image light; however, since the curved surfaces inside the waveguide are necessarily off-axis, off-axis aberrations that are difficult to correct can be introduced). By contrast, this implementation of the present application enables the use of a complete planar surface as the first reflective surface (thereby avoiding off-axis aberrations caused by curved surfaces and simplifying the optical design).

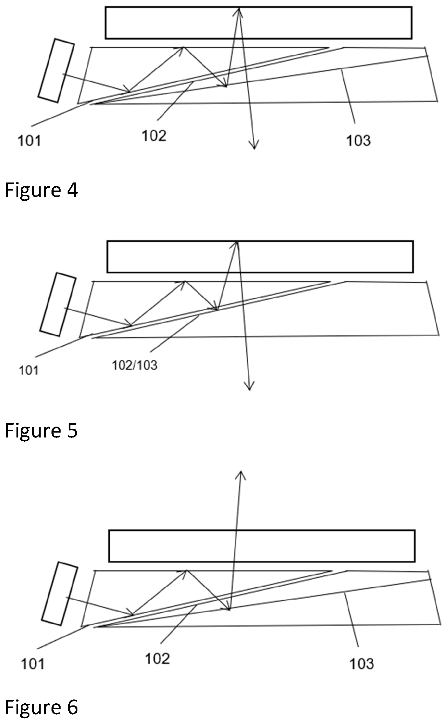

Further, the first device further includes a first sub-device and a second sub-device (as shown in FIGS. 4, 5, 6 and 21), the first sub-device including a first sub-surface that is not parallel to the first surface, light rays undergoing at least one total reflection between the first surface and the first sub-surface and the angle between the light rays and a normal of the first sub-surface being then changed, and the light rays exiting the first sub-surface. The second sub-device includes a second sub-surface and a first reflective surface, or the second sub-surface is the first reflective surface, the light rays exiting the first sub-surface entering the second sub-device from the second sub-surface and being reflected by the first reflective surface, or being directly reflected by the first reflective surface, then passing through the first sub-device again and exiting the first surface (or reflected from the first surface into the second sub-device and exiting the second sub-device). The advantage of further dividing the first device into two sub-devices is that each time the light rays undergo total reflection on the two non-parallel surfaces of the first sub-device, the incident angle between the light rays and the first surface or the first sub-surface changes. In this way, the angle at which the light rays are incident on the first reflective surface of the second sub-device can be changed, thereby adjusting parameters of the first reflective surface (coupling-out surface) (such as the angle to the first and second surfaces, length, width, etc.). In this design, an angle-selective coating layer can also be applied on the first surface. For example, the first sub-device has a refractive index of 1.6 and a total reflection angle of about 38°. An angle-selective reflection enhancing coating layer is applied on the first surface, such that the reflectance for the light rays incident on the first surface in the first sub-device with an incident angle of more than 32° is still more than 99% (close to total reflection), which expands the angle range of totally reflected light rays. The light rays with an angle of less than 30° can still be normally transmitted through the first surface (or the transmittance is increased, for example, the transmittance is more than 99%).

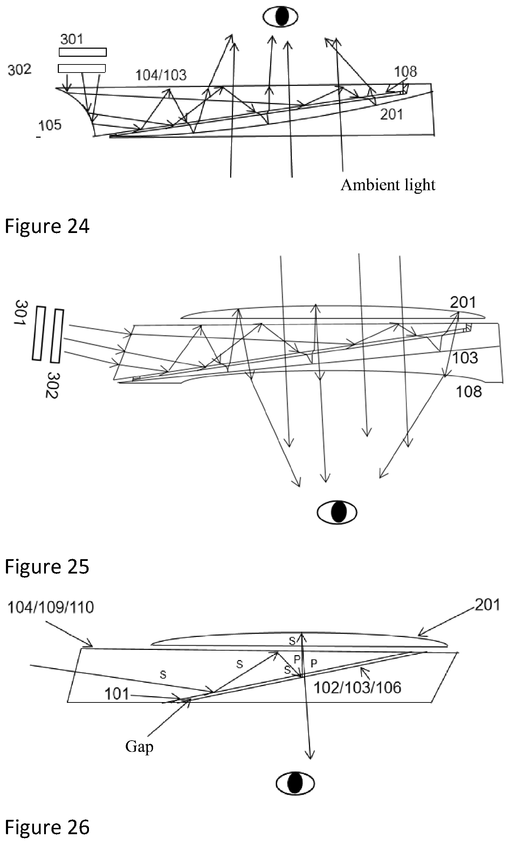

Further, the second device may further include a polarization reflective surface and/or a semi-transmissive and semi-reflective surface and wave plate devices. As shown in FIG. 26, after being coupled into the first sub-device of the first device, the image light undergoes total reflection on the first sub-surface 101 and the incident angle is reduced, and the image light is incident on the first surface 104. A polarization reflective coating 109 is coated on the first surface, and the incident image light is S-polarized light. Regardless of whether the image light meets the total reflection condition at this time, the image light will be reflected back to the first sub-surface 101 again. At this time, the angle between the image light and the first sub-surface is already smaller than the total reflection angle, and the image light exits the first sub-surface. After passing through a gap (the gap is air or a medium with a certain refractive index), the image light is incident on the second sub-surface 102. In this embodiment, the second sub-surface is the first reflective surface 103 on which a quarter-wave plate 106 and a reflective coating with a certain reflectance (such as a transmittance of 50% and a reflectance of 50%) are prepared. The image light is converted into circularly polarized light after being incident on the quarter-wave plate 106, and then partially reflected by the semi-transmissive and semi-reflective surface 103, then is transmitted through the quarter-wave plate 106 again, is modulated into P-polarized light, and returns to the first sub-device again. At this time, the angles between the image light and the first sub-surface as well as the first surface are smaller than the total reflection angle (the central light ray may be perpendicular or approximately perpendicular to the first surface), and the image light has been modulated into P-polarized light, which can be transmitted through the first surface and be incident into the second device. A half-wave plate 110 is prepared on a surface of the second device (or may also be prepared on the outer side of the first surface 104, and there may be no gap between the first and second devices in this embodiment).

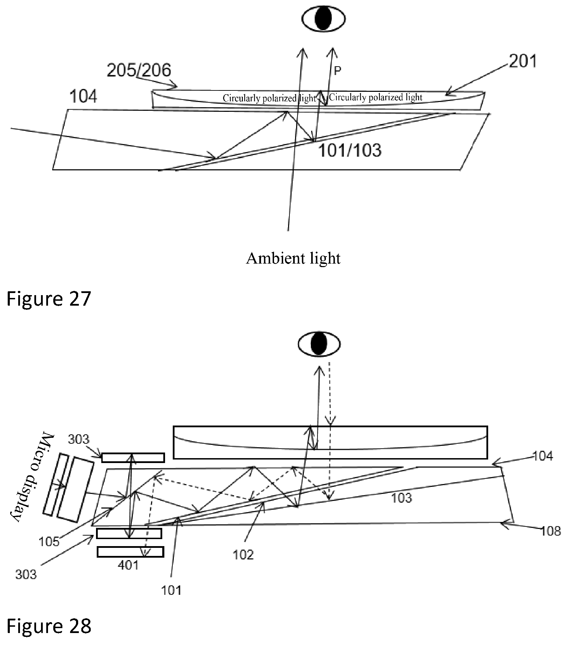

Further, the image light rays undergo one total reflection on each of the first sub-surface 101 (which may be the first reflective surface) and the first surface 104 of the first sub-device, are then reflected by the first reflective surface 103 (which may be coated with a polarization reflective coating), exit the first surface 104 (a quarter-wave plate may be prepared on the surface of the second device to modulate the image light into circularly polarized light), and are then incident into the second device. A coating with a certain reflectance and transmittance (such as a reflectance of 50% and a transmittance of 50%) is coated on the second reflective surface 201 of the second device. After the image light enters the second device, part of the image light first is transmitted through the second reflective surface 201 (as shown in FIG. 27). Since the second reflective surface 201 is a curved surface, the reflected part of the light will diverge and cannot enter an imaging optical path. Therefore, the above reflected light will not affect the imaging. The image light transmitted through the second reflective surface 201 will be incident on the quarter-wave plate 206 and modulated into S-polarized light, then reflected back (as circularly polarized light) by the reflective surface 205 coated with a polarization reflective coating. Part of the image light will be reflected and modulated by the second reflective surface 201, then converted into P-polarized light after passing through the quarter-wave plate, and is transmitted through the reflective surface 205 to enter the viewer's eye. The external ambient light becomes P-polarized light after being transmitted through the first reflective surface 103, is modulated into circularly polarized light before being incident on the second reflective surface 201, is then modulated into P-polarized light again by the quarter-wave plate 206, and will be transmitted through 205 and enter the viewer's eye. Further, the image light on the display can be focused once in the first or second device after being modulated by the image generation system, and the image at the focused position is then used as an intermediate image/object plane, modulated by the second device (such as the second reflective surface), and then enters the viewer's eye. Further, an electrochromic coating (for example, an electrochromic coating/glass having light transmittance controlled by voltage is attached) can further be coated on the surface of the second device facing the external environment, thereby realizing the switching between non-see-through VR and see-through AR (with controllable light transmittance).

Further, the second sub-surface and the first sub-surface have identical surface shapes or complementary surface shapes.

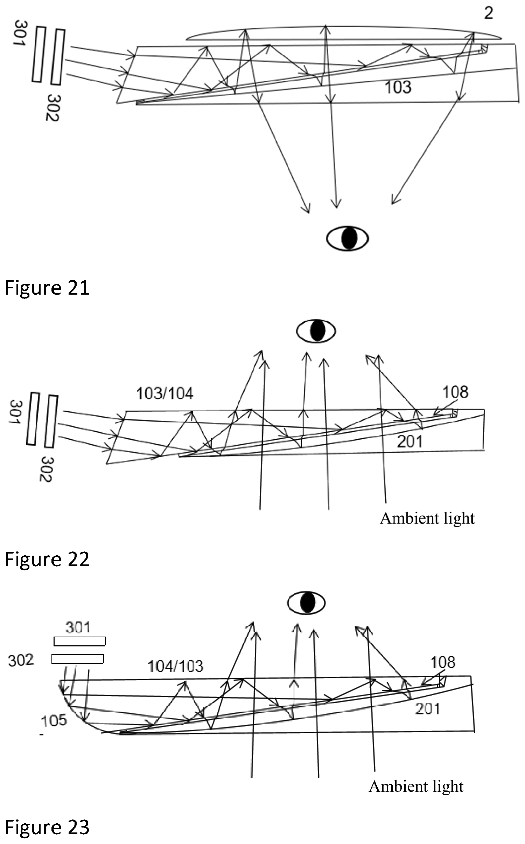

Further, a gap is provided between the second sub-surface and the first sub-surface, or a medium having a different refractive index is filled between the second sub-surface and the first sub-surface. For example, the first sub-surface and the second sub-surface have complementary surface shapes (as shown in FIG. 21), with a 5 um air gap there between. This can not only ensure that the light rays experience total reflection in the first sub-device, but also enable the light rays to be incident into the second sub-device as soon as possible when exiting the first sub-device. Alternatively, a medium with a low refractive index (such as a medium with a refractive index of 1.32) may be used to fill the gap (the medium may be an optical adhesive, which is cured by light or heat after gluing). Furthermore, the medium in the gap may have different refractive indices in different regions. For example, a front half of the gap is filled with a medium with a refractive index of 1.30 (such as pure water), and a rear half thereof is filled with a medium with a refractive index of 1.40. Further, an angle formed between the first reflective surface and the first surface may be equal to the angle formed between the first sub-surface and the first surface, or may be larger or smaller than the angle formed between the first reflective surface and the first surface (for example, the angle between an extension line of the first reflective surface and the first surface in FIG. 21 is smaller than the angle formed between the first sub-surface and the first surface, and in this case, the overall thickness of the device may generally not be increased). If the angle between the extension line of the first reflective surface and the first surface is set to be larger than the angle formed between the first sub-surface and the first surface, the incident angle of the image light rays propagating in the first sub-device can be made larger, ensuring that the image light rays better meet the total reflection condition, and in some cases, a central light ray may be made to exit approximately perpendicularly to the first surface.

Further, the first device further includes a plurality of sub-devices. The plurality of sub-devices include at least one sub-surface not parallel to the first surface (a certain angle may be formed between the sub-surfaces). After the image light rays undergo one or more total reflections between the one or more sub-surfaces, the angle between the image light rays and the first surface or other sub-surfaces changes (in some cases, the image light rays may first undergo total reflection on one sub-surface, and then are transmitted through the same sub-surface due to the change in the angle), and exit one of the sub-devices. One sub-surface of one of the plurality of sub-devices is the first reflective surface. For example, the first device includes first, second, and third sub-devices, which include a first surface, a first sub-surface, a second sub-surface, a third sub-surface and a first reflective surface. After entering the first sub-device, the image light rays are totally reflected or reflected by the first sub-surface and then incident on the first surface (the first surface is not parallel to the first sub-surface). After being reflected back to the first sub-surface by the first surface, the angle between the image light rays and the first sub-surface does not meet the total reflection condition (a gap between the first sub-surface and a corresponding surface of the second sub-device is filled with a medium with a low refractive index, or is an air gap). After being incident into the second sub-device, the angle between the above light rays and the normal of the second sub-surface is greater than the total reflection angle (the second sub-surface is not parallel to the first sub-surface), so the light rays will be reflected by the second sub-surface and reflected back to the first sub-device through the surface of the second sub-device corresponding to the first sub-surface of the first sub-device. At this time, the angle between the light rays (or most of the image light rays) and a normal of the first surface is still greater than the total reflection angle (if small part of the light rays no longer meet the total reflection condition, a coating that increases reflectance when the angle is close to a critical angle can also be coated on the first surface to make most of the energy still be reflected back). After being reflected, the above light rays will pass through the first sub-surface and enter the second sub-device. At this time, the angle between the light rays and the second sub-surface also does not meet the total reflection condition (the second sub-surface of the second sub-device corresponds to the third sub-surface of the third sub-device, a medium with a low refractive index is filled therebetween, or an air gap is formed therebetween). The light rays will be incident into the third sub-device and reflected by the first reflective surface that is not parallel to the second sub-surface/third sub-surface (a reflective coating may be coated on the first reflective surface). The reflected light rays will pass through the second sub-device into the first sub-device. At this time, the angle between the light rays and the normal of the first surface is already smaller than the total reflection angle, and the light rays will exit the first surface. This has the advantage that, by setting the angles between the first sub-surface, the second sub-surface and the first reflective surface (for example, each surface is non-parallel to the others), the angular change experienced by the light rays during each total reflection within the first device may vary, thereby providing greater flexibility in design. As required, the number of sub-devices and sub-surfaces may be increased (such as four, five, or more) to meet the design requirements.

Further, the first sub-surface and/or the second sub-surface are coated with any one or more of: an anti-reflection coating, a reflection enhancing coating, a wave plate, a hard coating, a polarization reflective coating, a wavelength-based reflective coating, a coating with different refractive indices in different regions, a coating with refractive index variations in different regions, an angle-selective reflective coating or an angle-selective anti-reflection coating. For example, anti-reflection coating layers are coated on the first and second sub-surfaces, which can ensure that the transmittance for light rays when passing through the first and second sub-surfaces exceeds 99%.

Further, the first sub-device and the second sub-device have the same or similar refractive indices. For example, the first and second sub-devices are made of the same material.

Further, the first sub-device is a triangular waveguide or a wedge-shaped waveguide. For example, the first sub-device is a triangular waveguide with an vertex angle of 20° (or the vertex angle may be cut off to form a wedge shape). The image light is coupled into the triangular or wedge-shaped waveguide from a side, incident on the first sub-surface, and then totally reflected to the first surface. Since the incident angle is still greater than the total reflection angle (or part of the light rays with an incident angle smaller than the total reflection angle are still reflected back due to an angle-selective coating on the first surface), the image light will be incident on the first sub-surface again. Due to the presence of the vertex angle, when the image light is incident on the first sub-surface again, the incident angle thereof is reduced by 40° compared with the previous time, and the light rays no longer meet the total reflection condition and will exit the first sub-surface.

Further, when the image light rays are coupled out of the first device, an angle between a primary optical axis of an optical path and a normal axis of the first surface is smaller than ± 40°. For example, an image viewed by the viewer is located in the center of the field of view, and the primary optical axis of the optical path is parallel to the normal axis of the first surface. In this case, a primary axis of the second device may also be parallel to the primary optical axis of the above optical path, so there will be no off-axis aberrations in the system, and all devices with optical powers may be axially symmetrically designed, which can greatly reduce the difficulty of optical design. Alternatively, a certain angle, such as 10°, may also be formed between the above primary optical axis and the normal axis of the surface so as to bring a certain degree of freedom to the system design, or the field of view of the image is configured to be horizontally or vertically asymmetric. For example, the field of view from the center of the eye to a nose side is 45°, and the field of view on an ear side is 55°.

Further, a gap exists between the second device and the first device. For example, a gap of 0.1 mm may enable the light rays to undergo total reflection in the first device. This gap may be empty or filled with a medium with a low refractive index (such as an optical adhesive with a low refractive index).

Further, the first reflective surface changes the angle of the image light rays, making the image light rays not meet the total reflection condition, thereby exiting the first device.

Further, the first reflective surface includes a polarization reflective surface or a surface coated with a coating with a preset reflectance. For example, a polarization coating that reflects S-polarized light and transmits P-polarized light is attached, or a coating with a certain transmittance and reflectance (such as a transmittance of 70% and a reflectance of 30%) may also be coated.

Further, the first reflective surface comprises a planar surface or a curved surface.

Further, the first surface comprises a planar surface or a curved surface.

Further, the first surface is coated with any one or more of: an anti-reflection coating, a reflection enhancing coating, a hard coating for increasing surface hardness, a wave plate, a polarization reflective coating, a wavelength-based reflective coating, a coating with different refractive indices in different regions, a coating with refractive index variations in different regions, an angle-selective reflection enhancing coating or an angle-selective anti-reflection coating (for example, 99% of the light rays inside the medium are still reflected when the incident angle is within a range greater than the total reflection angle by 5°, and 99% of the incident light rays with an incident angle that is smaller than the total reflection angle by 8° are transmitted).

Further, the first device further includes a second surface, the second surface being parallel to the first surface or forming a preset angle with the first surface, and the image light rays undergoing at least one total reflection between the first surface and the second surface, being then reflected by the first reflective surface, and being coupled out of the first device. The first reflective surface may be located between the first surface and the second surface.

Further, the second surface is coated with any one or more of: an anti-reflection coating, a reflection enhancing coating, a hard coating for increasing surface hardness, a wave plate (such as a quarter-wave plate or a half-wave plate), a polarization reflective coating, a wavelength-based reflective coating, a coating with different refractive indices in different regions, a coating with refractive index variations in different regions, an angle-selective anti-reflection coating or an angle-selective reflection enhancing coating, etc.

Further, the second device comprises any one or more of: a lens, a metalens/metamirror, a varifocal lens/deformable mirror, a liquid lens/liquid mirror, a liquid crystal lens/liquid crystal mirror, a transmissive or reflective spatial light modulator, a planar or curved mirror, a microlens array or micro-mirror array, a reflective coating or polarization reflective coating with a certain reflectance, a wave plate, a Fresnel lens, a grating, a prism, a mechanical motor, a voice coil motor, or an electronic and mechanical structure capable of changing a positions of a device. For example, the second device may be a combination of a lens and a mirror (such as the first surface being a transmissive curved surface and the second surface being a reflective or partially reflective curved surface), and a lens array, a Fresnel lens or a metalens may also be added to further reduce the size. The second device may further include a mechanical motor, a voice coil motor (VCM), or other mechanical structures to adjust the spatial position of an optical device, thereby realizing the function of statically or real-time dynamically changing the imaging position of an image (in some embodiments, these structures for position adjustment and electrical devices such as motors may also be included in the first device).

Further, the optical system further includes a third device, the third device including any one or more of: a lens, a metalens/metamirror, a varifocal lens/deformable mirror, a liquid lens/liquid mirror, a liquid crystal lens/liquid crystal mirror, a transmissive or reflective spatial light modulator, a planar or curved mirror, a microlens array or micro-mirror array, a reflective film or polarization reflective film with a certain reflectance, a wave plate, a Fresnel lens, a grating, a prism, a mechanical motor, a voice coil motor, or an electronic and mechanical structure capable of changing a positions of a device.

Further, the first device further includes a second surface, and the image light rays are coupled into the first device again, are partially or all transmitted through the first reflective surface, and are coupled out the first device from the first surface or the second surface. After being coupled out of the first device, the image light rays may directly enter the viewer's eye or enter the third device for further modulation.

Further, the image light rays entering the third device is reflected by the third device and is incident into the first device again. For example, the image light rays are incident into the first device again, transmitted through and exit the first reflective surface, are modulated by the second device again, and then exit to enter the viewer's eye.

Further, the optical system includes an image generation system, the image generation system including any one or more of: a micro display, a spatial light modulator, a lens, a metalens/metamirror, a varifocal lens/deformable mirror, a liquid lens/liquid mirror, a liquid crystal lens/liquid crystal mirror, a mirror, a polarizing mirror, a prism, a microlens array, a grating, a polarizer, a wave plate, a Fresnel lens, a mechanical motor, a voice coil motor, or an electronic and mechanical structure capable of changing a position of a device.

Further, the micro display includes any one or more of: OLED, LED, LCoS (Liquid Crystal on Silicon), LCD, DMD (Digital Mirror Device), LBS (Laser Beam Scanner), and CRT (Cathode-Ray Tube).

Further, an image generated by the image generation system is located between a focal point or an equivalent focal point of the second device and the second device. For example, the image generation system has only one device, i.e., a micro display, which is arranged between the equivalent focal point of the second device and the second device (or the optical center of the second device). Alternatively, the image generation system includes optical devices such as lenses/mirrors, and the micro display serves as an object, and the lenses/mirrors of the image generation system project a virtual or real image of the micro display between the equivalent focal point of the second device and the second device.

Further, the image (image plane) generated after the image light rays are modulated by the second device is located between a focal point or equivalent focal point of the third device and the third device.

Further, the optical system further includes any one or more of: a voice coil motor, a spatial light modulator, a mechanical motor, a liquid crystal lens, a liquid lens, and a varifocal lens.

Further, the optical system adjusts an imaging distance by changing the physical positions of devices (realized by motors, electrical motors, or other electronic or mechanical structures) or changing optical powers of the devices (such as by changing the phase distribution of liquid crystal lenses, liquid lenses, or spatial light modulators).

Further, an angle between a primary optical axis of an optical path of the image light rays that are coupled into the first device again and a normal axis of the first surface is less than ± 40°. For example, the primary optical axis of the optical path of the image light rays is parallel to the normal axis of the first surface, or the angle between the primary optical axis and the normal axis is 10°, etc.

Further, the second device and/or the third device modulates the transmitted ambient light to compensate for errors of myopia and astigmatism of the human eye. For example, the second device is a lens/mirror including two working curved surfaces. The curved surface facing the first or second surface transmits the incident light rays, and the curved surface facing away from the first surface reflects or partially reflects the incident light rays (such as total reflection, semi-transmission and semi-reflection, or polarization reflection); or the curved surface facing the first or second surface reflects the incident image light rays and transmits or partially transmits ambient light rays at the same time, and the curved surface facing away from the first surface transmits and modulates the incident ambient light rays.

Further, the first device further includes a second surface that is not parallel to the first surface, and after the image light rays or part of the image light rays undergoes at least one total reflection between the first surface and the second surface, an angle between the image light rays and the first surface and/or the second surface is changed, and the image light rays exit the first surface and/or the second surface. Further, the image light rays undergo at least one total reflection on the surface which the image light rays exit before exiting. In some embodiments, the reflection experienced by the image light rays or at least part of the light rays before exiting the first device is total reflection caused by the angle between the light rays and the surface exceeding the total reflection angle (rather than reflection caused by a reflective coating). A cross-section of the first device may be triangular or wedge-shaped, and the first reflective surface is the first or second surface. Unlike some of the above implementations, the first reflective surface in this scheme may not have a reflective coating, such that when the ambient light rays are transmitted through this surface, the transmittance for the ambient light rays may reach more than 90% (even more than 99%), thereby greatly increasing the transmittance for ambient light. As shown in FIGS. 22 and 23, in this embodiment, the first surface 104 also serves as the first reflective surface 103, that is, the first surface 104 and the first reflective surface 103 are the same surface. After being coupled into the first device, the image light rays undergo one or more total reflections between the first surface and the second surface. Due to the presence of the angle between the first surface and the second surface, the angle between the image light rays and a normal axis of the first or second surface will decrease after each total reflection until the total reflection condition is not met, and the image light rays thus exit the first or second surface. The second device includes a second reflective surface 201. A non-rotationally symmetric curved surface (a free-form surface or a portion of a rotationally symmetric surface) is often used for the second reflective surface 201 in such schemes. After being modulated by the second reflective surface, the central light ray of the image light rays (i.e., a chief ray or a central axis of the optical path) undergoes an angle change after being modulated by the second reflective surface (unlike some of the previous embodiments in which the chief ray of the image light rays is generally reflected back along an original path after being modulated by the second reflective surface). A reflective coating having a certain reflectance (for example, a reflectance of 25% and a transmittance of 75%, or a polarization-selective reflective coating) may be coated on the second reflective surface. The advantage of the above scheme is that the system thickness may be made thinner, and while reducing the system thickness, the transmittance of the system for ambient light and the light effeciency of image light may be greatly increased. In other embodiments, the total reflection is reflection that occurs when the angle between the light rays and the normal of the first and/or second surface is greater than the total reflection angle, or reflection caused by a coating coated on the surface (such as a dielectric reflective coating, a metal reflective coating, or a polarization reflective coating of a grating, etc.).

Further, the image light rays undergo at least one total reflection on each of the first surface and the second surface, and then exit the first device from the first surface or the second surface. As shown in FIG. 22 or 23, after being coupled into the first device, the image light first undergoes one total reflection on the second surface 108, and then is incident on the first surface 104. After being totally reflected or partially totally reflected by the first surface again, the image light is incident on the second surface again. At this time, the angle between the image light rays and the normal of the second surface is already smaller than the total reflection angle, and the image light rays will exit the second surface and enter the second device. After being modulated and reflected by the second reflective surface (which is a curved surface) of the second device, the image light rays exit the device. When entering the first device again, the angles between the image light rays and the normals of the first and second surfaces are both smaller than the total reflection angle, so the image light rays will exit the system. In such embodiments, the gap between the second device and the first device may be an air gap, or may be filled with a medium with a certain refractive index (such as glue with a refractive index lower than that of the first device). An angle-selective reflection enhancing coating may further be coated on the surface of the first device not facing the second device (such as the first surface 104 in FIGS. 22 and 23). For example, the device 1 has a refractive index of 1.60, and a total reflection angle of about 38.68°. After a coating is coated on the first surface 104, the light rays in the device 1 with an angle of more than 30° to the normal of the first surface still have a reflectance of more than 99%, and the transmittance for the light rays in the device 1 with an angle of less than 30° (or less than 25°) to the normal of the first surface is 99%.

Further, the first device and/or the image generation system includes at least one non-rotationally symmetric surface. For example, a lens/lens group/mirror/mirror group/prism group of the image generation system includes a non-rotationally symmetric surface for compensating for the aberrations caused by the second reflective surface of the second device, and particularly the aberrations (asymmetric aberrations) generated when the second reflective surface is a non-rotationally symmetric surface.

Further, the first device includes a curved surface. The focal points and/or centers of the curved surface and of at least one surface of the second device (such as the second reflective surface) are located at the same position, or a distance between the focal points and/or between the centers is less than a preset value, or the focal points and/or centers are located on a specific light ray or an extension line thereof, or a distance between the focal points and/or the centers and a specific light ray or an extension line thereof is less than a preset value (for example, the chief ray or central light ray of the central field of view of the image light, or the chief ray or central light ray of a certain field of view; the light ray undergoes a plurality of reflections to change directions and form a plurality of segments of lines in the waveguide, the focal points or centers of the two surfaces may be respectively on any segment or an extension line thereof, or a distance from any segment or an extension line thereof is less than the preset value). The curved surface shapes of the two may also be similar. As shown in FIG. 24, the curved surface 105 of the first device and the curved surface 201 of the second device are both parabolic surfaces (each is a portion of a certain parabolic surface, or a free-form surface). For example, the image light rays are incident on the surface 201 facing the focal point, and the image light rays are incident on the surface 105 facing away from the focal point. The focal points of the two parabolic surfaces are both located on the chief ray (or central light ray) of the central field of view and the extension line thereof (for example, the focal point of the surface 105 is on the line segment of the chief ray of the central field of view of the image incident on the surface 105 or an extension line or reverse extension line thereof, and the focal point of the surface 201 is on or near the reverse extension line of the line segment of the central image light ray incident on the surface 201), or the distance between the two focal points and the above light rays and extension lines thereof is less than 10 mm. In this way, due to the similar surface shapes, the two surfaces can well serve the function of aberration compensation.

Further, one surface of the first device is a curved surface, and the curved surface and at least one surface of the second device have identical shapes, or have a difference in shape within a preset range. As shown in FIG. 25, the second surface 108 has the same or similar surface shape as the surface 201 of the second device (such as a surface shape error within 20 um). In this way, for the image light rays, it is equivalent to adding a modulation surface 108. Moreover, since the surface shapes of the surfaces 108 and 201 are the same or similar, the ambient light are almost not changed after being transmitted through the surfaces 201 and 108. This has the advantage that the thickness and weight of the device may be further reduced. In addition, the surface 108 may also be designed to have a preset deviation from the surface 201 (such as a different curvature), such that the combination of the surfaces can modulate both the image light and the ambient light, and compensate for defects such as myopia, hyperopia, and astigmatism of the human eye.

Further, the optical system further includes a detector. The detector is configured for detecting light rays coming from the viewer (such as the viewer's eye) and/or light rays coming from the external environment. The detector collects the detected light rays by means of the first device and/or the second device. The detector may be an image sensor (such as CCD, CMOS, etc.), or an infrared detector (proximity detector, infrared detector, infrared image sensor, etc.). The detector may be configured for determining whether the apparatus is currently being worn, and may further be configured for capturing the viewer's eye to realize eye tracking. Compared with an obliquely arranged eye tracking system in traditional AR/VR systems, an optical axis of an eye tracking system provided by the present application is perpendicular or approximately perpendicular to the plane of the viewer's pupil (realized by light guiding through a waveguide system, as shown in FIG. 28), so more accurate eye tracking can be realized by simpler calculations. In addition, the sensor may further be configured for capturing the external environment. Unlike cameras in the traditional AR/VR systems, light guiding settings of the first device (waveguide) in the present application can make a capturing optical path parallel to the human eye's optical axis and at the same position, that is, a captured image may be completely the same as an image seen by the human eye. The sensor may be arranged outside a certain surface of the first device, and an image light of the external environment or the viewer (eyeglasses) is coupled into the detector by means of the first device and the lens/mirror group (or a portion of the lens/mirror group (as shown in FIG. 28), and a dedicated image sensor lens/mirror group may also be added. This has another advantage that the imaging, eye tracking, environment capturing, TOF, and DOE modules may all be integrated on the first device (waveguide), making the system smaller like an integrated circuit board.

Further, the optical system further includes a light emitter for emitting light to the viewer and/or the external environment. The emitter emits light rays through the first device and/or the second device. The light emitter may be an infrared light emitter, a structured light emitter (DOE), etc. The light emitter may be arranged outside a certain surface of the first device, and emit light to the viewer through the first device (waveguide) (for implementing functions such as proximity detection and eye tracking), or emit light to the outside (such as a certain form of structured light) for implementing functions such as SLAM. This has the advantage that all optical-related modules may be integrated on the first device (waveguide), making the system smaller like an integrated circuit board.

An optical apparatus provided by the present application includes the above optical system.

Compared with the prior art, the present application has the following beneficial effects:
In the present application, By means of placing a micro display laterally, after the image light is coupled into the first device (such as a waveguide), the distance of the optical path perpendicular to the human eye is shortened by utilizing the lateral propagation of the light in the first device, such that the thickness of the device is greatly reduced. On this basis, the system can also be designed so that image light rays enter and exit from the first device multiple times, thereby further reducing the thickness of the device. Moreover, total reflection is used for replacing the semi-transmissive and semi-reflective surface used in the PANCAKE and Birdbath schemes (in both PANCAKE and Birdbath schemes, image light undergoes one transmission and one reflection on the semi-transmissive and semi-reflective surface, and the theoretical maximum optical efficiency is only 25%), thereby achieving a substantial improvement in the optical efficiency. In addition, since the micro display is placed laterally and is not located on a light path along which the human eye observes ambient light, a see-through system can be realized, and the observation effect of an optical see-through method for an external environment is much better than the observation effect of Video See Through schemes of existing VR systems.

### BRIEF DESCRIPTION OF THE DRAWINGS

By reading the following detailed descriptions of non-limiting embodiments with reference to the drawings, other features, objectives and advantages of the present application will become more apparent:
FIG. 1 is a schematic structural diagram of an optical system;
FIG. 2 is a schematic structural diagram of an optical system;
FIG. 3 is a schematic structural diagram of an optical system;
FIG. 4 is a schematic structural diagram of an optical system;
FIG. 5 is a schematic structural diagram of an optical system;
FIG. 6 is a schematic structural diagram of an optical system;
FIG. 7 is a diagram illustrating the operating principles of an optical system;
FIG. 8 is a diagram illustrating the operating principles of an optical system;
FIG. 9 is a diagram illustrating the operating principles of an optical system;
FIG. 10 is a diagram illustrating the operating principles of an optical system;
FIG. 11 is a diagram illustrating the operating principles of an optical system;
FIG. 12 is a diagram illustrating the operating principles of an optical system;
FIG. 13 is a diagram illustrating the operating principles of an optical system;
FIG. 14 is a diagram illustrating the operating principles of an optical system;
FIG. 15 is a diagram illustrating the operating principles of an optical system;
FIG. 16 is a diagram illustrating the operating principles of an optical system;
FIG. 17 is a diagram illustrating the operating principles of an optical system;
FIG. 18 is a diagram illustrating the operating principles of an optical system;
FIG. 19 is a diagram illustrating the operating principles of an optical system;
FIG. 20 is a diagram illustrating the operating principles of an optical system;
FIG. 21 is a diagram illustrating the operating principles of an optical system;
FIG. 22 is a diagram illustrating the operating principles of an optical system;
FIG. 23 is a diagram illustrating the operating principles of an optical system;
FIG. 24 is a diagram illustrating the operating principles of an optical system;
FIG. 25 is a diagram illustrating the operating principles of an optical system;
FIG. 26 is a diagram illustrating the operating principles of an optical system;
FIG. 27 is a diagram illustrating the operating principles of an optical system;
FIG. 28 is a diagram illustrating the operating principles of an optical system; and
FIG. 29 is a diagram illustrating the operating principles of an optical system.

List of reference signs: 1-first device; 2-second device, 3-image generation system; 4-third device; 101-first sub-surface; 102-second sub-surface; 103-first reflective surface; 104-first surface; 105-image coupling-in surface; 106-wave plate; 107-third surface; 108-second surface; 109-reflective coating; 110-half-wave plate; 201-second reflective surface; 202-wave plate; 203-eyeglasses; 204-curved surface; 205-reflective surface; 206-wave plate; 301-micro display; 302-lens/lens group/prism group; 303-image generation lens/mirror group; 304-wave plate; 401-detector.

### DETAILED DESCRIPTION OF THE EMBODIMENTS

The present application will be described in detail below with reference to specific embodiments. The following embodiments help those skilled in the art to further understand the present application, but do not limit the present application in any way. It should be noted that a person of ordinary skill in the art could also make several modifications and improvements without departing from the spirit of the present application. These would all fall within the scope of protection of the present application.

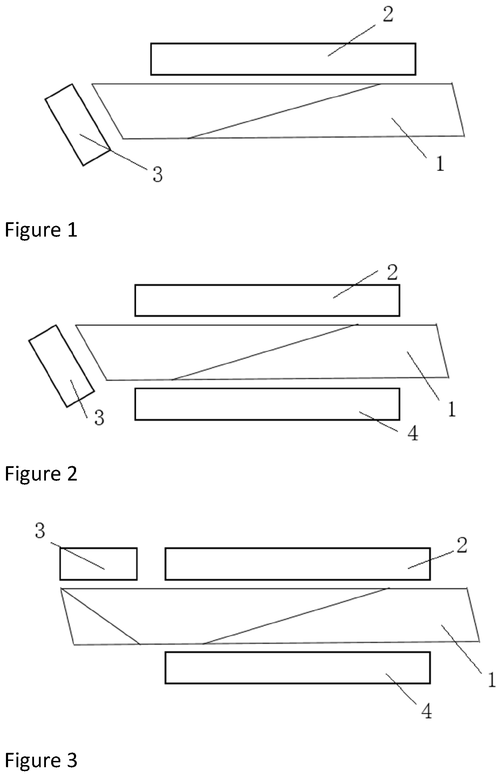

As shown in FIG. 1, An AR/VR optical system includes an image generation system, a first device 1 and a second device 2. A micro display of the image generation system 3 is a high-resolution Micro OLED (such as having a dimension of about 1 inch and a resolution of 2560 x 2560), which generates image light rays based on signals from an electronic system. The image generation system further includes a lens group and a prism. The lens group modulates an image output by the OLED (for example, magnifies or reduces the image to form a real or virtual image near a focal point of the second device), and the prism is responsible for changing a propagation direction of the image light rays to guide/couple the image light rays into the first device 1. The image generation system in this embodiment further includes a polarizer, which modulates image light into S-polarized light relative to a first reflective surface.

In this embodiment, the optical system, including the lens group and the prism in the image generation system, may be equivalent to a lens with a focal length of about -25mm, which projects a virtual image of the image on the micro display into the first device. In an optical path, the imaging position of the virtual image is between the focal point of the second device and the second device.

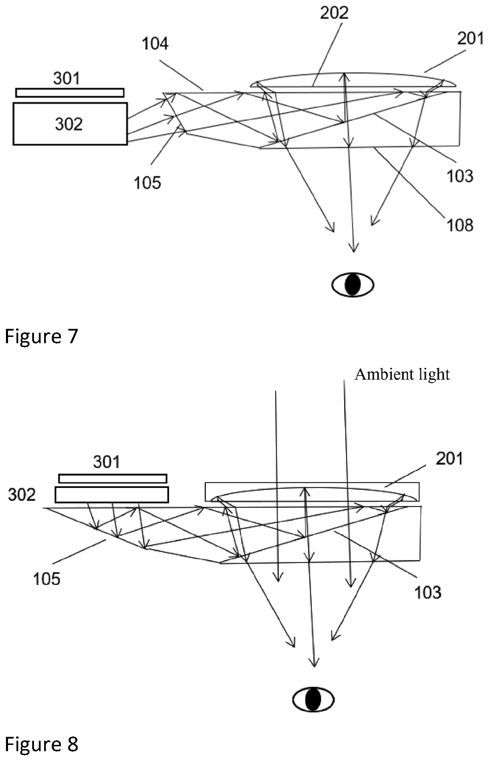

As shown in FIG. 7 and FIG. 8, the first device has a thickness of about 8 mm and is made of a resin material with a refractive index of 1.6. The first device includes an image coupling-in surface 105, a first surface 104, a second surface 108, and a first reflective surface 103. After the image light rays are coupled into the first device, since an angle between all of the image light rays and the first surface 104 of the first device (an angle between the light rays and a normal line of a tangent line at an incident point of the first surface 104) is greater than an angle of total reflection, the image light rays will undergo total reflection on the first surface 104 and not exit. After the total reflection, the image light rays will be incident on the first reflective surface 103. The first reflective surface 103 is a polarization reflective surface (for example, attached with a grating-type polarization reflective coating that transmits P-polarized light and reflects S-polarized light), which can reflect the image light incident for the first time. The first reflective surface 103 is configured such that the propagation angle of the image light is changed (for example, the first reflective surface may be configured such that a chief ray/central light ray of the image/a primary optical axis of the optical path is perpendicular to the first surface or at an angle less than a certain degree), thereby breaking the total reflection condition of the image light and making the image light exit from the first surface 104. In this embodiment (as shown in FIG. 7), an angle between the image coupling-in surface 105 and the first surface 104 is 60°, the primary optical axis of the optical path of the image light is perpendicular to the image coupling-in surface, and an angle between the first reflective surface 103 and the first surface 104 is 30°. The image light is reflected by the first reflective surface 103 and exits the first device.

The second device is a centrally symmetric spherical or aspherical mirror (or a lens group composed including a plurality of lenses and mirrors). In this embodiment, the primary optical axis of the second device is perpendicular to the first surface of the first device. The second device has an aperture of about 40 mm, and an air gap of 0.5 mm exists between the second device and the first device. A quarter-wave plate 202 is attached to a surface of the second device opposite to the first device. In this embodiment, a reflectance of the second reflective surface 201 is more than 99.9%. After the image light rays exit the first device, the image light rays first pass through the surface of the second device to which the quarter-wave plate 202 is attached, are modulated into circularly polarized light, are reflected by the second reflective surface 201, and again pass through the surface of the second device to which the quarter-wave plate is attached, and the light rays are converted into P-linearly polarized light, and then enter the first device again. At this time, since the image light rays have been modulated into P-polarized light, the image light will be transmitted through the first reflective surface 103, exit the second surface 108 of the first device, and enter a viewer's eyes. Since modulation of the image generation system, the image light generates an image near the focal point of the second device, and the aberrations of the image generation system and the second device may be designed to compensate for each other, the viewer will finally clearly see a virtual image imaged at a certain distance.

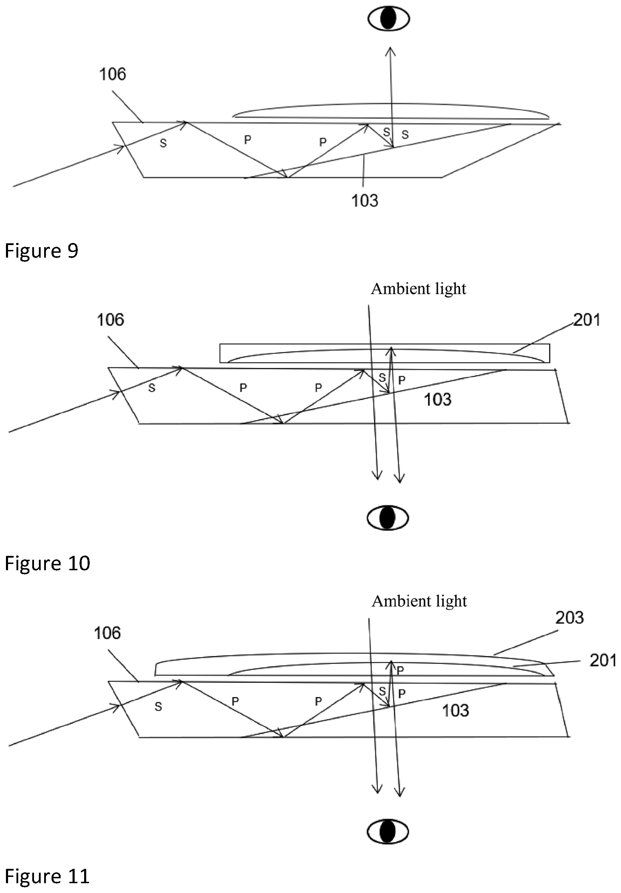

In a variant of this embodiment, a semi-transmissive and semi-reflective coating or a coating with a certain reflectance (for example, a reflectance of 30% and a transmission of 70%) may also be used for the second reflective surface 201 of the second device. A lens with one surface having a shape complementary to the second device and the other surface being planar is prepared (such as glued) above the second reflective surface 201 (as shown in FIG. 8), such that the VR system can be transformed into an AR system, and external ambient light can be transmitted through the second device and the first device and enter a human eye. In addition, if the viewer' eyes suffer from problems such as myopia, hyperopia or astigmatism, the planar surface of the second device facing ambient light may be formed as a curved surface (or a curved mirror can be added, as shown in FIG. 11) to compensate for the viewer's defects and function as eyeglasses, such that the viewer can view the external environment as if through glasses. In this case, for the long-distance or short-distance modulation of the image light, focusing may be achieved by adding a VCM voice coil motor and other devices in the image generation system to dynamically change spatial positions of the optical devices therein, or by using devices such as liquid lenses or liquid crystal lenses, or by adding a reflective phase spatial light modulator at the position of the image coupling-in surface 105 (coupling-in reflective surface) in FIG. 8 to dynamically simulate any lens (which can compensate for myopia, hyperopia and astigmatism). In the above schemes, a imaging distance can be adjusted in real time by control signals, and light field display can be achieved while compensating for errors such as myopia, hyperopia and astigmatism of the human eye.

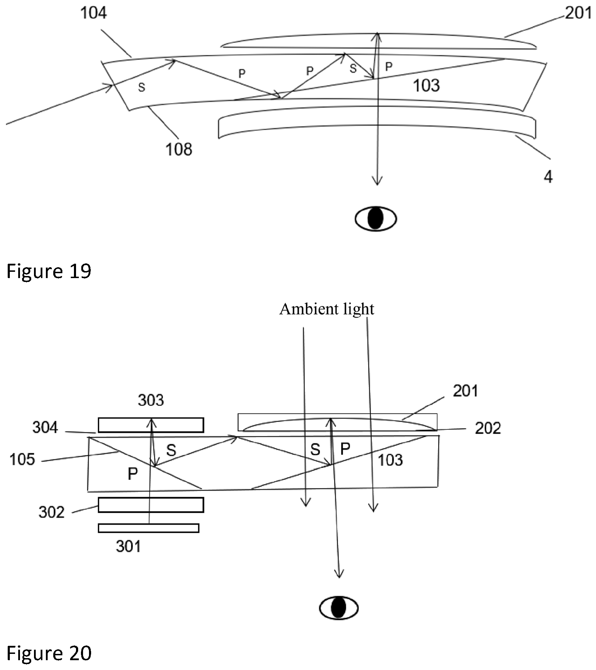

In another variant, the image generation system and image coupling-in may be designed as shown in FIG. 20. The image light rays from the micro display 301 are P-polarized light (a polarizer may be added), which can be transmitted through the image coupling-in surface 105 (image coupling-in reflective surface) on which a polarization reflective coating is prepared, exit the first device, then be incident into the image generation lens/mirror group 303 with a quarter-wave plate 304 is prepared on a surface. After being reflected, the image light rays pass through the quarter-wave plate again, are modulated into S-polarized light, and enter the first device. Thereafter, the image light rays are reflected by the polarization reflective surface into which the image is coupled, undergo total reflection in the first device, and are reflected by the first reflective surface 103 and then coupled out of the first device. The advantage of this design is that, on the premise that the size of the system is not increased, the length of an image coupling-in optical path can be increased. A longer optical path will bring some design freedom. For example, the image light rays of the micro display may converge and be focused to form a real image first. The converged light can reduce the size of the coupling-in surface (in traditional designs, virtual images are often formed, and the image light rays are modulated to diverge and expand initially, requiring a larger coupling-in surface). In addition, an orientation of the micro display may be changed, such as arranging the micro display on the human eye side instead of the external environment side.

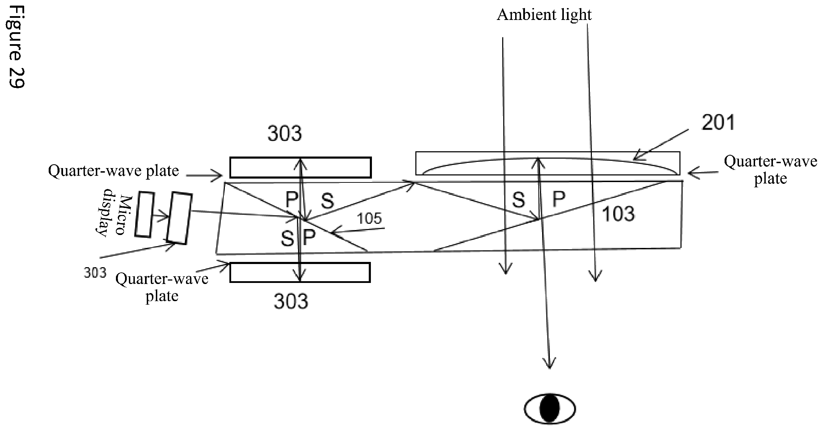

In another variant, the image generation system may be arranged on a side of the first device (as shown in FIGS. 28 and 29, the micro display is located on an extension line of the propagation direction of the image light in the first device. The propagation direction refers to the propagation direction of the image light rays in the first device after the image light is incident on the image coupling-in surface 105 on which a polarization reflective coating is prepared and its propagation direction is changed and before the image light is reflected by the first reflective surface). The light is reflected to the image generation lens/mirror group 303 parallel to the first surface 104 or the second surface 108 by the image coupling-in surface 105 of the first device (as shown in FIGS. 28 and 29) on which a reflective coating or polarization reflective coating is prepared. The image generation lens/mirror group 303 further includes a quarter-wave plate. The modulated light is incident into the first device again, is transmitted through the image coupling-in surface 105 (on which the reflective coating or polarization reflective coating is prepared) due to the change in the polarization direction, then is modulated by the image generation lens/mirror group parallel to the other surface (second surface 108 or first surface 104) of the first device. The image generation lens/mirror group further includes a quarter-wave plate. The modulated light is incident into the first device again with its polarization direction changing again, is reflected by the image coupling-in surface 105 on which the reflective coating or polarization reflective coating is prepared, and propagates in the first device until exiting the first device and being modulated by the second device. In addition, the display and the image generation lens group may also be arranged on the first surface 104, the second surface 108 or a surface approximately parallel thereto, or the display and the image generation lens group are arranged on a side surface parallel or approximately parallel to the propagation direction of the light in the first device (such as a surface enclosed by the image coupling-in surface 105, the first surface 104 and the second surface 108 in FIG. 28, i.e., a side surface parallel to the plane of the paper). The propagation direction refers to the propagation direction of the image light rays in the first device after the image rays are incident on the image coupling-in surface 105 on which the polarization reflective coating is prepared and their propagation direction is changed and before the image rays are reflected by the first reflective surface 103. The adjustment of the position of the above coupling-in surface can be realized by adjusting an angle of the image coupling-in surface 105 where the polarization reflective coating is located.

it is also possible to use a dynamically modifiable spatial light modulator (such as a reflective phase-modulated LCoS chip) for the above image generation lens/mirror group (such as 303 in FIGS. 28 and 29) to realize a real-time variable image focal length (light field display) based on signals. In this embodiment, a detector (such as an infrared image sensor) may be added behind the image generation lens/mirror group. As shown in FIG. 28, the light rays from the viewer's eye are coupled out of the first device through the first and second devices and enter the detector (the light rays from the eyes can exit the portion of the mirror of the image generation lens/mirror group 303 that is not coated with a reflective coating, or the coating of the mirror of the image generation lens/mirror group 303 can transmit light of specific wavelength bands such as infrared light to be transmitted through the image generation lens/mirror group 303 and enter the detector). An optical device may also be added in front of the detector to focus and image the light rays, so as to capture the viewer's eyes and realize eye tracking. The above detector may also be an ordinary image sensor, such as a CCD or a CMOS, which captures images of the external environment by means of similar optical path settings. A light emitter (such as an infrared emitter, or no emitter, using the image light emitted by the display) may also be arranged after the image generation lens/mirror group on the other side or on the image generation system side to assist in realizing eye tracking, or emit structured light (such as using a DOE device) to the external environment to realize the SLAM function.

In another variant, the second device may also be a lens instead of a mirror, such that the image light coupled out of the first device by being reflected by the first reflective surface is modulated by the second device and then directly enters the human eye. Generally, the primary optical axis of the optical path of the image light rays after being reflected by the first reflective surface is configured to be parallel (or coincident) with the optical axis of the first device, which can reduce the off-axis aberrations generated by the system and simplify the optical design. In this embodiment, if the system is a non-see-through VR system, a high-reflectance metal reflective coating may be directly coated on the first reflective surface. If the system is a see-through AR system, the first reflective surface may still be coated or applied with a polarization reflective coating. In a variant of this embodiment, a liquid crystal lens or a transmissive phase spatial light modulator may also be used for the lens. In this case, since the liquid crystal lens or phase spatial light modulator is sensitive to polarization, the liquid crystal lens or phase spatial light modulator may be configured to modulate only S-polarized light. In this way, the image light reflected by the first reflective surface is S-polarized light, which can be modulated by the liquid crystal lens into a virtual image at a certain distance to be viewed. The ambient light enters from the other side of the first device, is transmitted through the first reflective surface, and is filtered into P-polarized light, which will not be modulated when being transmitted through the liquid crystal lens, so that the ambient light can be normally seen by the human eye.

In a variant of the above embodiment, the quarter-wave plate may also be prepared on the first surface of the first device (as shown in FIGS. 9, 10, 11 and 12) or adjacent to the first surface of the first device. In this case, the image light coupled into the first device for the first time is S-polarized light. After undergoing one total reflection at the first surface, the image light will be modulated into P-polarized light. A polarization reflective coating that reflects S-polarized light is attached to the first reflective surface. The image light modulated into P-polarized light will be transmitted through the first reflective surface, undergo one total reflection at the second surface, return to the first surface, be modulated into S-polarized light after the total reflection, be incident on the first reflective surface, and is then reflected to be coupled out of the first device. This has the advantage that the propagation distance of the image light in the first device can be further increased, a lateral optical path can be further added, the length of the optical path perpendicular to the direction of the eyeglasses 203 can be compressed, and the thickness can be reduced. Preparing the quarter-wave plate on the first surface of the first device will also result in benefits to some image generation systems and coupling into the first device. For example, in the system shown in FIG. 3, if a quarter-wave plate 106 is prepared on the first surface, when the micro display has a large dimension or the angle of the image light is large, the image light is reflected once by the image coupling-in reflective surface of the first device, and is then incident on the first surface and undergoes one total reflection. In some designs, the image light should not be reflected by the image coupling-in reflective surface for the second time, but due to the constraints of light angle and image dimension, the light often hits the image coupling-in reflective surface again. At this time, if the image coupling-in reflective surface is also a polarization reflective surface, the S-polarized light reflected once will be modulated into P-polarized light by the quarter-wave plate on the first surface after undergoing total reflection at the first surface, and will be transmitted through the image coupling-in reflective surface and be incident on the second surface or the first reflective surface, thereby ensuring the correctness of the optical path and achieving the design purpose.

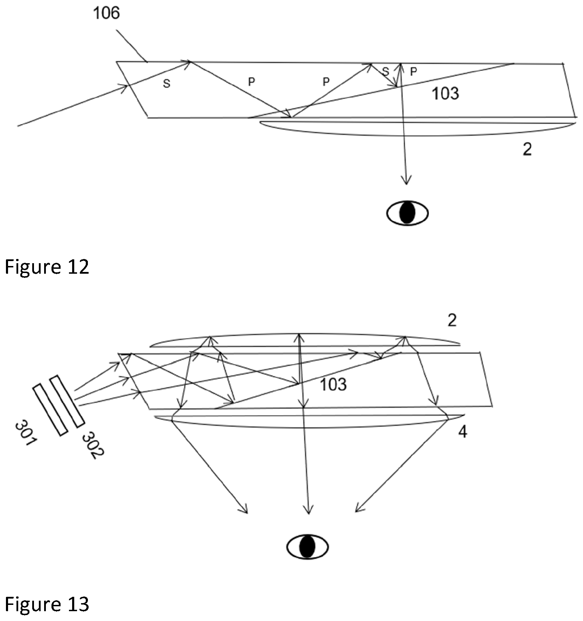

In a variant of the above embodiment, in addition to the quarter-wave plate, a metal reflective coating or a partial reflective coating may be coated or attached to the first surface (as shown in FIG. 12). In this way, after the image light undergoes a plurality of total reflections, the image light is incident on the first reflective surface, is reflected by the first reflective surface and then reflected back into the first device by the first surface, and since the polarization direction changes from the S-polarized light to the P-polarized light, the image light will be transmitted through the first reflective surface and exit the second surface. In this embodiment, the second device may be arranged outside the second surface.

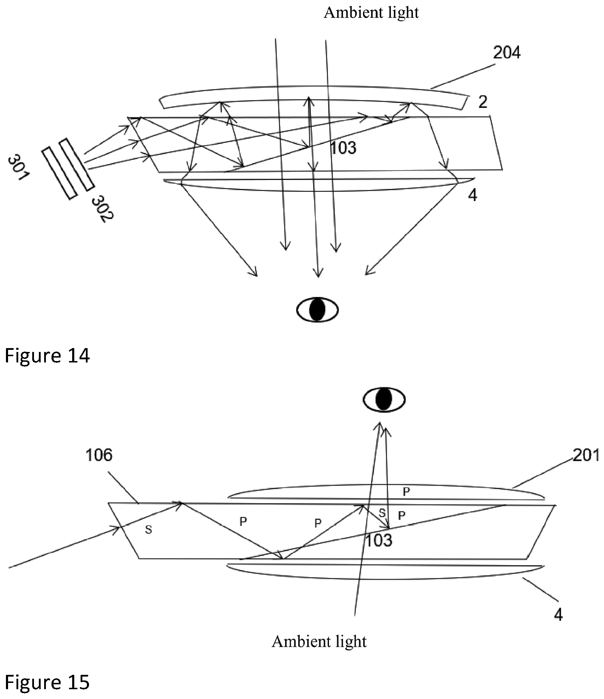

In another embodiment, the system further includes a third device 4 which is arranged on the side of the second surface of the first device corresponding to the first surface (as shown in FIGS. 2, 3 and 13). The third device is a lens or a lens group, which further modulates the light rays reflected by the second device. In a VR system, this can increase the number of optical surfaces and the means for light modulation, thereby achieving a better optical performance. When the system is an AR system, the reflective surface of the second device may be a semi-transmissive and semi-reflective surface or a polarization reflective surface, such that the external ambient light can be transmitted through the second device. The third device may also be used for compensating for the influences of the first and second devices on the ambient light (as shown in FIG. 14, an additional curved surface 204 is added on the second reflective surface to compensate for the ambient light without affecting the image light). For example, the third device is designed to have a focal length similar to that of the second device, have a focal point configured to coincide with that of the second device, and the third device, the first device and the second device compensate for one another in terms of aberration, such that the ambient light can still be normally viewed by the human eyes after being transmitted through the first, second, and third devices. In the design of the third device, the diopter of the human eye can also be considered to compensate for the viewer's problems such as myopia, hyperopia and astigmatism. The above compensation for the human eyes' aberrations can also be realized on the second device, thereby only affecting the ambient light. light field display can be implemented by the distance of the image light by changing the spatial positions of the optical devices of the imaging system (or using devices such as liquid lenses, liquid crystal lenses and phase spatial light modulators), realizing real-time adjustment of the image distance while compensating for the viewer's myopia, hyperopia and other problems.

In a variant of this embodiment (as shown in FIG. 15), the second device is a transmissive lens or lens group. The image light rays exit the first device, and then directly exit the second device into the human eye. The third device 4 serves as a compensation plate to only compensate for the influence of the second device on the ambient light and the viewer's myopia, hyperopia, astigmatism, etc., and the third device does not participate in the modulation of the image light.

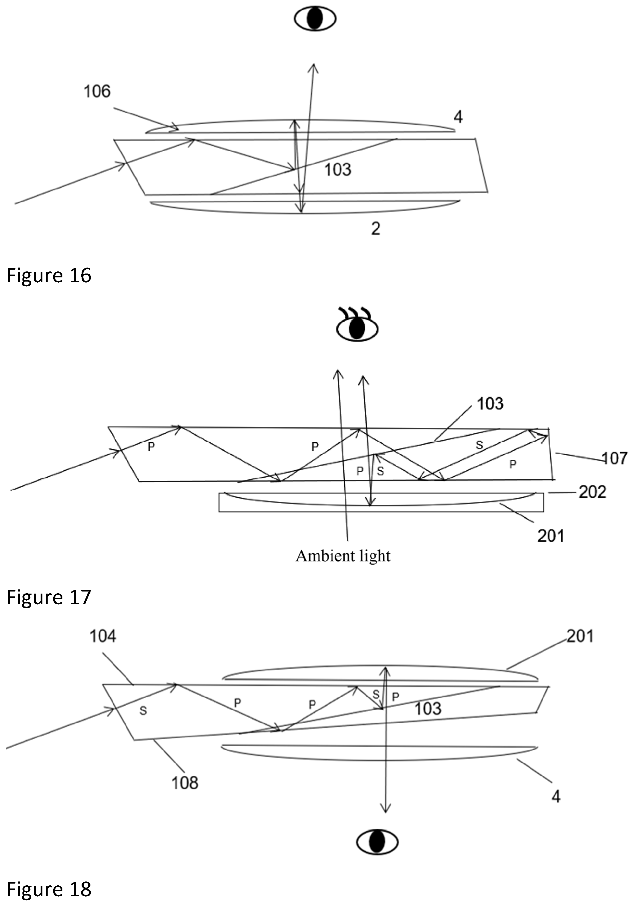

In another embodiment, to further shorten the length of the optical path, the system may be designed such that the image light undergoes a plurality of back-and-forth propagations between the first device, the second device, and the third device (as shown in FIG. 16). In this embodiment, the first reflective surface is a semi-transmissive and semi-reflective surface, a quarter-wave plate and a polarization reflective coating are attached to each of two surfaces of the second device, and a high-reflectance metal reflective coating (or a semi-transmissive and semi-reflective coating) is plated on the surface of the third device. The image light is modulated into circularly polarized light and enters the first device. After being reflected by the first reflective surface for the first time, the image light exits to the surface of the second device to which the quarter-wave plate is attached, is modulated into S-linearly polarized light, then is reflected by the surface of the second device to which the polarization reflective coating is attached to, passes through the surface of the quarter-wave plate again, is converted into circularly polarized light and enters the first device. Part of the light rays that is transmitted through the first reflective surface is incident on the reflective surface of the third device, is modulated, is transmitted through the first reflective surface again, then is incident on the surface of the second device to which the quarter-wave plate is attached, is modulated into P-polarized light, and then is transmitted through the polarization reflective surface of the second device into the human eye. In this embodiment, the image light propagates back and forth a plurality of times in the first, second, and third devices, which can further compress the optical path and reduce the thicknesses of the devices.

In another embodiment, the first device also has a third surface 107. The third surface 107 is a side surface opposite the first and second surfaces (as shown in FIG. 17). A quarter-wave plate and a reflective coating are prepared on the third surface. The image light incident into the first device is P-polarized light. A polarization reflective coating is prepared on the first reflective surface. After entering the first device, the image light rays are first transmitted through the first reflective surface, is then incident on the third surface, are transmitted through the quarter-wave plate twice, are modulated into S-polarized light, and are reflected back into the first device. When the image light is incident on the first reflective surface again, the image light will be reflected by the first reflective surface and coupled out of the first device. The second device is a glued lens. A surface of the second device close to the first device is planar and has a quarter-wave plate 202 attached thereto. The glued surface is an aspherical surface on which a semi-transmissive and semi-reflective coating is coated (or a specific transmission-reflection ratio may be set, such as a reflectance of 30% and a transmission of 70%). After the image light is incident on the semi-transmissive and semi-reflective surface and modulated, part of the image light is reflected back to the surface on which the quarter-wave plate is prepared, is modulated into P-polarized light, enters the first device again, is transmitted through the first reflective surface, and is then coupled out of the first device. The surface of the second device facing the external environment is a planar surface (or a surface with a certain optical power and cylindrical power to compensate for the human eye's defects). The ambient light is transmitted through the second device and the first device and enters the human eye such that the ambient light can be normally viewed. The advantage of the above arrangement of the third surface is that the length of the optical path can be further increased within the limited dimension of the first device, facilitating the optical design.

In another embodiment (as shown in FIG. 18), the first surface 104 and the second surface 108 of the first device are not parallel and have an angle therebetween. Each time the image undergoes total reflection at the first and second surfaces, the angle between the image and the above surfaces will decrease (or can be designed to increase according to the requirements of the system). After a plurality of total reflections, the above image light rays are incident on the first reflective surface and exit. Compared with the system where the first and second surfaces are parallel, the first device that is wedge-shaped or triangular in this embodiment has the advantages that the angle between the image light and the first and second surfaces can be changed during the total reflection of the image light in the first device. This angle has an impact on the distance from the image generation system to the first reflective surface and the thickness of the first device. For example, the angle between the coupling-in surface and the first reflective surface and the first and second surfaces is directly related to this angle. Therefore, this design provides additional freedom for the system design.

In another embodiment (as shown in FIG. 19), the first and second surfaces are curved surfaces. The image light is modulated by the first and second surfaces while propagating with total reflection. In this way, the number of curved surfaces that can modulate the image light is increased without increasing the number of devices. In addition, if the system is a see-through AR system, the above first and second surfaces may also modulate the ambient light, compensate for the influences of the second and third devices on the ambient light, enable the ambient light to be normally transmitted through the system and be viewed by the human eye, and also compensate for the viewer's problems such as myopia, hyperopia and astigmatism by functioning as eyeglasses.

For the image generation system, in some cases, it is desirable for the primary axis of the optical path of the image generation system to be perpendicular to the image light coupling-in surface of the first device (to avoid generating asymmetric aberrations). Since an angle between the primary axis of the image optical path and the first and second surfaces is an important system parameter, the coupling-in surface and the angle between the first reflective surface and the first and second surfaces are directly related to the angle, and the thickness of the first device is directly related to the above parameters. Generally, the smaller the angle between the coupling-in surface and the first reflective surface and the first and second surfaces, the thinner the first device can be made.

In another embodiment (as shown in FIG. 21), the first device includes a first sub-device and a second sub-device. The first sub-device is a triangular waveguide (or a wedge-shaped waveguide with an angle of 20° between the first surface and a first sub-surface) made of a resin material with a refractive index of 1.60 and an vertex angle of 20°. The image light rays are S-polarized light and are coupled into the waveguide from a side (the coupling-in surface may be configured to be perpendicular to the primary optical axis of the image light, or a scheme with coupling-in through a reflective surface may be adopted, such as the coupling-in scheme in FIG. 3). After being incident on the first sub-surface, since an angle (incident angle) between all the image light rays and an normal of the first sub-surface is greater than 60° and less than 78°, which is greater than the total reflection angle (about 38.68°), all the light rays will be totally reflected by the first sub-surface to the first surface. Due to an angle of 20° between the first surface and the first sub-surface, when the image light is incident on the first surface, the incident angle of the image light is relatively reduced by 20° compared with the previous incident angle with the first sub-surface, but the incident angle is still greater than 40°, and the total reflection condition is met. When the image light is totally reflected by the first surface and incident on the first sub-surface again, the incident angle of the image light on the first sub-surface will be further reduced by 20°, at this time, the incident angle is in the range of 20°-38°, and the image light will not meet the total reflection condition and exit the first sub-surface. The second sub-device is a triangular waveguide (or a wedge-shaped waveguide) with an vertex angle of 20°, which includes a second surface, a first reflective surface and a second sub-surface. An angle between the second surface and the second sub-surface is 20°, the first reflective surface is inside the second sub-device, and an angle between the first reflective surface and the second surface is 14.5°. The second sub-surface corresponds to the first sub-surface (identical and complementary in terms of surface shape), and a gap of about 10 um exists between the second sub-surface and the first sub-surface (which may be an air gap or be filled with a medium having a low refractive index). The two surfaces may be separated by a 10 um thick coating or metal at a peripheral non-light-transmitting area on the edges of the first and second sub-surfaces, and the edges can be cured with glue, or a structural member may also be used to separate the two surfaces. A polarization reflective coating (or a semi-transmissive and semi-reflective coating with a certain transmittance and reflectance) is prepared on the first reflective surface, which can reflect S-polarized light and transmit P-polarized light. S-polarized image light exiting the first sub-surface enters the second sub-device from the second sub-surface, is reflected by the first reflective surface, exits the second sub-surface, enters the first sub-device again through the first sub-surface, and is incident on the first surface. At this time, the image light has an incident angle in the range from -9 °to 9° relative to the first surface, and does not meet the total reflection condition and will exit the first surface. This system further includes a second device. An air gap of 50 um exists between the second device and the first surface. The second device includes two parallel outer surfaces and an internal semi-transmissive and semi-reflective surface (or a reflective surface or polarization reflective surface with a certain reflectance and transmittance) with a curvature (which may be a spherical, aspherical or free-form surface). A quarter-wave plate is also attached to the surface of the second device facing the first surface. After the image light passes through the quarter-wave plate and enters the second device, the image light is modulated and reflected on the semi-transmissive and semi-reflective surface, passes through the quarter-wave plate again, is modulated into P-polarized light, returns to the first device, is transmitted through the first reflective surface, and exits the second surface into the viewer's eye. When the system is a VR device, a metal reflective coating may be prepared on the other surface of the second device to reflect all the image light rays back. When the system is an AR device, the other surface of the second device may not be coated or coated with an anti-reflection coating. External ambient light may be transmitted through the other surface of the second device, partially pass through the semi-transmissive and semi-reflective surface in the second device, and is partially transmitted through the first device into the viewer's eye. In this embodiment, anti-reflection coatings may further be coated on the first and second sub-surfaces, such that the transmittance of light rays when exiting and entering the first and second sub-surfaces may reach 99% or more without affecting the total reflection condition.

In a variant of the previous embodiment, the refractive index of the first sub-device is still 1.60, and an angle-sensitive reflection enhancing coating layer is also coated on the first surface and has a reflectance of more than 99% for light rays propagating in the medium and having an incident angle of more than 30° to the first surface (although a 30° incident angle is already smaller than the total reflection angle, the reflectance for light rays with an incident angle of more than 30° is close to the reflectance for totally reflected light after the coating layer is added) and still has a high transmittance for light with an incident angle of less than 30° (such as a transmittance of more than 99% for light rays with an incident angle of less than 25° in the waveguide). In this variant, the vertex angle of the first sub-device may still be set to be 20°, and the incident angle of the image light relative to the first sub-surface 101 after being coupled into the first sub-device is between 50° and 70°. After undergoing one total reflection, the light rays are incident on the first surface, and the incident angle of the light is 30°-50°. Although the light with an incident angle of less than 38.68° no longer meet the total reflection condition, due to the presence of the angle-selective coating, the reflectance is still 99% for the light rays with an incident angle of more than 30°, thus being similar to undergoing one total reflection. When the above light rays are incident on the first sub-surface again, the angle between the light rays and the first sub-surface becomes 10°-30°, and the light rays no longer meet the total reflection condition and will exit the first sub-surface. The second sub-device includes a second sub-surface 102 that is identical/complementary to the first sub-surface, and an air gap of 5 um exists between the two surfaces. Unlike the previous embodiment, the first reflective surface 103 in this embodiment is the second sub-surface 102, and the angle between the first reflective surface and the second surface of the second sub-device is also 20°. A polarization reflective coating (or a semi-transmissive and semi-reflective coating) is prepared on the first reflective surface. The image light is reflected by the first reflective surface and then is incident on the first surface of the first sub-device again within an angle range from -10° to 10°. At this time, the incident angle of the image light relative to the first surface is already less than 30°, and the image light will exit the first surface. In this embodiment, the second device is a lens or a lens group, and the image light rays are transmitted through the lens/lens group and directly enters the viewer's eye. If the system is an AR device, it is also possible to add a third device (such as a lens/lens group) behind the second surface of the second sub-device to compensate for the influence of the second device on the ambient light and the errors such as myopia, hyperopia and astigmatism of the viewer's eye.

The image light in the above embodiment may also be non-polarized light. Then, the light incident on the first reflective surface for the first time will be partially reflected and partially transmitted. The transmitted light rays will continue to propagate in the second sub-device, and may be absorbed by coating a light-absorbing material on an edge of the second sub-device. This part of the light rays will not return to the original imaging optical path, and thus will not become stray light or ghosting which interferes with the imaging.

The coupling-in surface of the above embodiment may also be realized by a mirror, and couples the image light into the first sub-device like the coupling-in surface in FIG. 3, or a prism may be added in the image generation system to couple the light into the first device.

In another embodiment, the first device includes a first surface 104 and a second surface 108. Unlike the previous embodiments, the first reflective surface 103 and the first surface 104 in this embodiment are the same surface (as shown in FIG. 22). An angle between the first surface 104 and the second surface 108 is about 15°. After the image light is coupled into the device, the image light is first incident on the second surface at an angle of 68°-88° to the normal of the second surface, is totally reflected by the second surface, and is then incident on the first surface. At this time, an angle between the image light and the normal of the first surface is 38°-58°. The first device has a refractive index of 1.67, and a total reflection angle of approximately 36.7°. The image light will be totally reflected by the first surface and incident on the second surface again. At this time, the angle between the image light and the normal of the second surface will become 23°-43°. A medium layer (adhesive layer) with a refractive index of 1.36 and a thickness of less than 0.01 mm is filled between the second surface and the second device. Therefore, the total reflection angle of the second surface is approximately 54.5°. At this time, the angle between the light rays and the second surface is smaller than the total reflection angle, and the light rays will exit the second surface and be then incident into the second device. In this embodiment, the second device is made of a material with the same refractive index as the first device. The second device includes a second reflective surface 201 for which a non-rotationally symmetric free-form surface or a portion of a rotationally symmetric surface (only a portion is taken, and this portion of the surface is non-rotationally symmetric) is used. The image light rays or part of the image light rays are modulated by the second reflective surface and then reflected back to the first device. In this embodiment, after being modulated by the second device, the angle between the image light and the normal of the second surface is further reduced so as to be transmitted through the second surface. At this time, the central light ray or the central light ray of the central field of view can be approximately perpendicular to the first surface, such that the image light may exit the first device. The second device includes two parts (for example, two glued lenses each with a complementary surface), and the second reflective surface is prepared on one of the two complementary surfaces. The second reflective surface may be a polarization reflective surface (transmitting P-polarized light and reflecting S-polarized light), or a surface with a certain reflectance (for example, a reflectance of 25% and a transmission of 75%). In addition, one surface of one of the two parts included in the second device may also be complementary to the second surface of the first device, and one surface of the other part may also be parallel to the first surface of the first device or form a small angle therewith. In this embodiment, since there is no reflective coating on the first reflective surface, when the image light and the ambient light modulated by the second device are incident, due to the incident angle being smaller than the total reflection angle, a high transmittance (for example, > 99%) can be achieved by means of an anti-reflection coating. In a variant of this embodiment, the material of the first device remains unchanged, the angle between the first surface and the second surface is 20°, and the angle of the incident light rays remains unchanged. When the image light rays are incident on the first surface for the first time, the angle between the image light rays and the normal of the first surface is 28°-48°, and part of the light rays has an incident angle already smaller than the total reflection angle. At this time, an angle-selective reflective coating can be prepared on the first surface to still allow for a reflectance of more than 99% for the light rays with an incident angle in a range of 28°-36.7° and a transmittance of more than 90% for the light rays having an incident angle smaller than 25° to solve this problem (the light rays having an incident angle of 25° inside the medium have an angle of 45° after entering the air, i.e., a see-through field of view of approximately 90°, which does not cause a great impact on the observation of the external environment). In this embodiment, when the image light is incident on the second surface for the second time, the angle between the image light and the normal of the second surface has been reduced to 8-28°, and even if an air gap is applied between the first device and the second device, the normal propagation of the light rays will not be affected. Generally, anti-reflection coatings may be prepared on the above first and second surfaces and a corresponding surface of the second device to improve the light transmittance. The surface of the second device facing the external environment may generally be formed as a surface shape corresponding to the first surface (such as a parallel planar surface when the first surface is a planar surface, the same curved surface when the first surface is a curved surface, or a curved surface with compensation for myopia/hyperopia/astigmatism, etc.), such that the ambient light is transmitted through the entire system like being transmitted through a flat glass, without affecting the observation of the environment by the viewer. Of course, the above surface may also be formed as a surface having a certain diopter so as to compensate for myopia, astigmatism, or other problems of the viewer's eye, thereby functioning as eyeglasses.

In a variant of the previous embodiment, coupling-in in the system is implemented by means of a non-asymmetric reflective curved surface 105 (as shown in FIG. 23). This has one advantage that aberrations generated by the non-axisymmetric second reflective surface can be compensated for by the curved surface 105. Alternatively, other non-axisymmetric lenses/mirrors may be introduced into the system to compensate for the above aberrations. In the above system, the lens/reflective mirror group 302 and/or the coupling-in surface 105 may include a non-rotationally symmetric curved surface or curved reflective surface to compensate for the aberrations caused by the non-rotationally symmetric second reflective surface 201.

Compared with the existing Fresnel lens scheme or Birdbath scheme, the length of the above system in a direction perpendicular to the human eye is greatly shortened, thereby significantly reducing the thickness of an optical engine. Compared with the PANCAKE scheme, on the basis of a similar or smaller thickness, since there is no semi-transmissive and semi-reflective surface, there is no situation where 75% of light energy is lost caused by light passing through the semi-transmissive and semi-reflective surface twice. In most embodiments, the optical efficiency of the above system will be several times that of the PANCAKE scheme. And, compared with the traditional Fresnel lens or PANCAKE scheme, since the imaging device is arranged laterally, the above system may be formed as a see-through system to realize see-through of the ambient light, thereby designing the system as MR/AR. Compared with the PANCAKE scheme, another advantage of the system is that, due to a certain angle formed between the primary optical axis of the first reflective surface and the first device, the second device as well as a viewing direction of the human eye, part of the image light that fails to be completely transmitted or reflected as designed is incorrectly reflected or transmitted and will not enter the designed imaging optical path to cause ghosting, thereby greatly mitigating the ghosting problem of the PANCAKE scheme.

In the description of the present application, it should be understood that orientation or position relationships indicated by terms such as "upper", "lower", "front", "rear", "left", "right", "vertical", "horizontal", "top", "bottom", "inner", and "outer" are based on orientation or position relationships shown in the accompanying drawings and are merely for ease of description of the present application and simplification of the description, rather than indicating or implying that the apparatuses or elements referred to must have a specific orientation or be constructed and operated in a specific orientation, and therefore cannot be construed as limiting the embodiments of the present application.

Specific embodiments of the present application have been described above. It should be understood that the present application is not limited to the particular embodiments described above, and that various changes or modifications may be made by those skilled in the art within the scope of the claims without affecting the substantive content of the present application. In a case of no conflict, the embodiments of this application and the features in the embodiments may be combined with each other in any way.

## Claims

1. An optical system, comprising a first device and a second device,
wherein the first device comprises a first surface, image light rays are coupled into the first device, and after entering the first device, the image light rays undergo at least one total reflection on the first surface;
the first device further comprises a first reflective surface, the first reflective surface coupling the image light rays that have undergone total reflection on the first surface out of the first device;
the image light rays coupled out of the first device are modulated by the second device, and the modulated image light rays are coupled into the first device again and partially or all transmitted through the first reflective surface one or more times; or the image light rays modulated by the second device exit the optical system.

2. The optical system according to claim 1, wherein the first device further comprises a first sub-device and a second sub-device, the first sub-device comprising a first sub-surface that is not parallel to the first surface, light rays undergoing at least one total reflection between the first surface and the first sub-surface and an angle between the light rays and a normal of the first sub-surface being then changed, and the light rays exiting the first sub-surface, the second sub-device comprising a second sub-surface and a first reflective surface, or the second sub-surface being the first reflective surface, and the light exiting the first sub-surface entering the second sub-device from the second sub-surface and then being reflected by the first reflective surface or directly reflected by the first reflective surface.

3. The optical system according to claim 2, wherein the second sub-surface and the first sub-surface have identical surface shapes or complementary surface shapes.

4. The optical system according to claim 2, wherein a gap is provided between the second sub-surface and the first sub-surface, or a medium having a different refractive index is filled between the second sub-surface and the first sub-surface.

5. The optical system according to claim 2, wherein the first sub-surface and/or the second sub-surface are coated with any one or more of: an anti-reflection coating, a reflection enhancing coating, a wave plate, a hard coating, a polarization reflective coating, a wavelength-based reflective coating, a coating with different refractive indices in different regions, a coating with refractive index variations in different regions, an angle-selective reflective coating or an angle-selective anti-reflection coating.

6. The optical system according to claim 2, wherein the first sub-device and the second sub-device have the same or similar refractive indices.

7. The optical system according to claim 2, wherein the first sub-device is a triangular waveguide or a wedge-shaped waveguide.

8. The optical system according to claim 1, wherein when the image light rays are coupled out of the first device, an angle between a primary optical axis of an optical path and a normal axis of the first surface is smaller than ± 40°.

9. The optical system according to claim 1, wherein a gap exists between the second device and the first device.

10. The optical system according to claim 1, wherein the first reflective surface causes the image light rays to exit the first device by changing angles of the image light rays.

11. The optical system according to claim 1, wherein the first reflective surface comprises a polarization reflective surface or a surface coated with a coating having a preset reflectance.

12. The optical system according to claim 1, wherein the first reflective surface comprises a planar surface or a curved surface.

13. The optical system according to claim 1, wherein the first surface comprises a planar surface or a curved surface.

14. The optical system according to claim 1, wherein the first surface is coated with any one or more of: an anti-reflection coating, a reflection enhancing coating, a wave plate, a hard coating, a polarization reflective coating, a wavelength-based reflective coating, a coating with different refractive indices in different regions, a coating with refractive index variations in different regions, an angle-selective reflective coating or an angle-selective anti-reflection coating.

15. The optical system according to claim 1, wherein the first device further comprises a second surface, the second surface being parallel to the first surface or forming a preset angle with the first surface, and the image light rays undergoing at least one total reflection on the first surface and/or the second surface, being then reflected by the first reflective surface and being coupled out of the first device.

16. The optical system according to claim 15, wherein the second surface is coated with any one or more of: an anti-reflection coating, a reflection enhancing coating, a wave plate, a hard coating, a polarization reflective coating, a wavelength-based reflective coating, a coating with different refractive indices in different regions, a coating with refractive index variations in different regions, an angle-selective reflective coating or an angle-selective anti-reflection coating.

17. The optical system according to claim 1, wherein the second device comprises any one or more of: a lens, a metalens/metamirror, a varifocal lens/deformable mirror, a liquid lens/liquid mirror, a liquid crystal lens/liquid crystal mirror, a transmissive or reflective spatial light modulator, a planar or curved mirror, a microlens array or micro-mirror array, a reflective coating or polarization reflective coating with a certain reflectance, a wave plate, a Fresnel lens, a grating, a prism, a mechanical motor, a voice coil motor, or an electronic and mechanical structure capable of changing a positions of a device.

18. The optical system according to claim 1, further comprising a third device, the third device comprising any one or more of: a lens, a metalens/metamirror, a varifocal lens/deformable mirror, a liquid lens/liquid mirror, a liquid crystal lens/liquid crystal mirror, a transmissive or reflective spatial light modulator, a planar or curved mirror, a microlens array or micro-mirror array, a reflective coating or polarization reflective coating with a certain reflectance, a wave plate, a Fresnel lens, a grating, a prism, a mechanical motor, a voice coil motor, or an electronic and mechanical structure capable of changing a positions of a device.

19. The optical system according to claim 1, wherein the first device further comprises a second surface, and the image light rays are coupled into the first device again, are partially or all transmitted through the first reflective surface, and are coupled out from the first surface or the second surface.

20. The optical system according to claim 18, wherein the image light rays entering the third device is reflected by the third device and is incident into the first device again.

21. The optical system according to claim 1, comprising an image generation system, the image generation system comprising any one or more of: a micro display, a spatial light modulator, a lens, a metalens/metamirror, a varifocal lens/deformable mirror, a liquid lens/liquid mirror, a liquid crystal lens/liquid crystal mirror, a mirror, a polarizing mirror, a prism, a microlens array, a grating, a polarizer, a wave plate, a Fresnel lens, a mechanical motor, a voice coil motor, or an electronic and mechanical structure capable of changing a position of a device.

22. The optical system according to claim 21, wherein the micro display comprises any one or more of: OLED, LED, LCoS, LCD, DMD, LBS, and CRT.

23. The optical system according to claim 21, wherein an image generated by the image generation system is located between a focal point or an equivalent focal point of the second device and the second device.

24. The optical system according to claim 18, wherein an image generated after the image light rays are modulated by the second device is located between a focal point or an equivalent focal point of the third device and the third device.

25. The optical system according to claim 21, wherein the optical system adjusts an imaging distance by changing physical positions of devices or by changing optical powers of the devices.

26. The optical system according to claim 1, wherein an angle between a primary optical axis of an optical path of the image light rays that are coupled into the first device again and a normal axis of the first surface is less than ± 40°.

27. The optical system according to claim 1 or 18, wherein the first device and/or the second device and/or the third device modulates transmitted ambient light so as to compensate for errors of myopia, hyperopia, and astigmatism of a human eye.

28. The optical system according to claim 18, wherein the first device, the second device and the third device compensate for one another, such that optical parameters of ambient light remain unchanged after being transmitted through the entire system, or the optical parameters are changed according to settings.

29. The optical system according to claim 1, wherein the first device further comprises a third surface, the third surface being located on a side of the first device, and image light being reflected from the third surface back into the first device.

30. The optical system according to claim 29, wherein the third surface is coated with one or more of: an anti-reflection coating, a reflection enhancing coating, a wave plate, a polarization reflective coating, a wavelength-based reflective coating, a coating with different refractive indices in different regions, a coating with refractive index variations in different regions, an angle-selective reflective coating or an angle-selective anti-reflection coating.

31. The optical system according to claim 1, wherein the second device has rotational symmetry.

32. The optical system according to claim 1, wherein the first surface of the first device is a planar surface or a curved surface.

33. The optical system according to claim 1, wherein the first device further comprises a second surface that is not parallel to the first surface, and after the image light rays or at least part of the image light rays undergo at least one total reflection between the first surface and the second surface, an angle between the image light rays and the first surface and/or the second surface is changed, and the image light rays exit the first surface and/or the second surface; wherein the first reflective surface is the first or second surface.

34. The optical system according to claim 33, wherein the image light rays or at least part of the image light rays undergo at least one total reflection on each of the first surface and the second surface, and then exit the first device from the first surface or the second surface.

35. The optical system according to claim 1, wherein the first device comprises a curved surface, focal points and/or centers of the curved surface and of at least one surface of the second device are located at the same position, or a distance between the focal points and/or between the centers is smaller than a preset value, or the focal points and/or the centers are located on a specific image light ray or on an extension line of the image light ray, or a distance between the focal points and/or the centers and the specific image light ray or the extension line of the image light ray is smaller than a preset value.

36. The optical system according to claim 1, wherein one surface of the first device is a curved surface, and the curved surface and at least one surface of the second device have identical shapes, or have a difference in shape within a preset range.

37. The optical system according to claim 1, wherein the first device further comprises a plurality of sub-devices, the plurality of sub-devices comprising at least one sub-surface not parallel to the first surface, light rays undergoing one or more total reflections between the one or more sub-surfaces and an angle between the light rays and the first surface or the other sub-surfaces is changed, and the light rays exiting one of the sub-devices, wherein one sub-surface of one of the sub-devices is the first reflective surface.

38. The optical system according to claim 1, further comprising a detector configured to detect light rays coming from a viewer and/or from external environment.

39. The optical system according to claim 1, further comprising a light emitter configured to emit light toward a viewer and/or external environment.

40. An optical apparatus, comprising an optical system according to any one of claims 1 to 39.
